# EUROPEAN PATENT SPECIFICATION

(11) **EP 3 274 638 B1**
(45) Date of publication and mention of the grant of the patent: **14.10.2020**
(21) Application number: 16713048.3
(22) Date of filing: 24.03.2016
(51) Int. Cl.: F24S 10/20, F24S 80/20

(54) **SOLAR ENERGY SYSTEM**
SONNENENERGIESYSTEM
SYSTÈME D'ÉNERGIE SOLAIRE

(30) Priority: 26.03.2015 GB 201505168
(43) Date of publication of application: 31.01.2018
(73) Proprietor: SOLAR FLUIDICS UK LIMITED, Fish Quay, North Shields, Tyne and Wear NE30 1JA (GB)
(72) Inventor: LAING, Edward, Singapore City 049712 (SG); SIVERSON, Cory, Singapore City 049712 (SG)
(74) Representative: Archer, Graham John
(86) International application number: PCT/GB2016/050861
(87) International publication number: WO 2016/151341

(56) References cited:
- EP-A1- 0 048 207
- EP-A1- 0 048 207
- EP-A1- 1 707 897
- WO-A1-2014/144996
- WO-A1-2014/144996
- DE-A1- 4 210 975
- DE-A1- 4 210 975
- DE-A1- 4 219 909
- DE-A1- 4 219 909
- DE-A1- 4 219 909
- DE-U1- 29 722 908
- US-A- 3 981 294
- US-A- 3 981 294
- US-A- 4 390 240
- US-A- 4 390 240
- US-A- 4 964 395
- US-B2- 7 870 691

## Description

The present application is directed to the field of solar energy and in particular to capturing and harnessing energy from solar radiation, in particular to convert the energy into useful heat energy in a solar thermal system.

At noon, on a cloudless day at the equator, 1 square metre of the Earth's surface receives around 1000W of energy. It has long been recognised that this energy could provide a significant contribution to the energy needs of the human population. To date, two different approaches have been pursued to harness this energy. Solar photovoltaic (Solar PV) systems use semiconductor materials, typically based on silicon, to absorb energy from the sun and convert it into electrical energy. Photons incident on the photovoltaic material cause electrons within the material to excite into a higher energy state and enable them to act as charge carriers for an electric current. This electrical energy can be used locally or transmitted onto an electrical grid for transmission over long distances. The solar PV approach is attractive due to the simplicity of its direct conversion of incident solar energy. However, the maximum theoretical efficiency of a solar PV panel is around 50% and typical domestic solar PV systems have an efficiency of around 15%, with the current record efficiency of an operating PV system being only around 40%.

An alternative approach is to use a thermal solar system to convert incident solar energy into heat in a target fluid such as water. In some cases, the target fluid can then be used to generate electrical energy, for example using a steam or gas turbine. However, this requires the use of concentrated solar power using mirrors and lenses to focus the incoming radiation to obtain high enough temperatures in the target fluid (typically around 600-800°C) to make conversion to electrical energy feasible. In most cases, electricity is not generated but thermal solar systems are used to heat water to 100°C or less for local use in sterilising, pasteurising, distillation, cooking, space or water heating, drying, cleaning or solar-driven cooling.

In a simple solar thermal flat panel system, a working fluid such as water is passed through tubing, typically made of a black plastic material. The plastic of the tubing absorbs energy from the incoming solar radiation, and heats the water within the tubing. The heated water circulates through the system and can be used directly if the water is the target fluid, for example for washing, or can be passed through a heat exchanger to transfer its heat to another material, for example a storage heating system. The tubing can be maintained within the panel within an evacuated or near-evacuated chamber formed for example using a sealed chamber with a glass surface. The vacuum or semi-vacuum reduces loss of heat from the working fluid back to the atmosphere.

For thermal solar systems that simply convert incident radiation into a heated fluid, efficiencies can theoretically be high, but the efficiency of these systems is limited by factors such as the reflection and/or transmission of solar energy from the absorbing surface and any covering protective layer, such as a glass layer. The efficiency of these systems is also limited by the capacity of the absorbing surface to absorb the incoming radiation, which varies with the temperature difference between the solar panel and its surroundings. Typical efficiencies for flat-plate solar thermal systems are around 50-60%.

In US 3,981,294 an all glass composite building panel is disclosed which is suitable for use as an integral structural member in roofs, ceilings, walls and floors. The panel is constructed of three layers of glass separated by integral raised walls fused to the adjacent glass layers to define three possible combinations of two enclosed spaces; two layers of contiguous individual vacuum cells; one layer of contiguous individual vacuum cells and one layer comprising a serpentine passageway for liquid flow therethrough, said serpentine passage containing a heat absorptive material; or two layers comprising individual serpentine passageways for liquid flow.

The invention is defined in the appended independent claims, with preferred features being set out in the dependent claims.

According to the invention, there is provided a solar energy system for heating a target fluid using incident solar radiation, the system comprising:
a protective upper layer;
a target fluid layer comprising the target fluid;
a light transmissive inter-fluidic dividing layer;
a working fluid layer comprising a working fluid; and
a lower retaining layer;
wherein the working fluid is arranged to absorb light in the visible part of the spectrum and the target fluid has a lower absorbency than the working fluid in the visible part of the spectrum; and
wherein incoming solar radiation passes through the target fluid prior to passing into the working fluid.

The system provides a solar energy system in which a higher proportion of the energy in the incident radiation is absorbed into the target fluid. In particular, by arranging both the target fluid and the working fluid as layers in the system, for example in a panel, both fluids can be used to absorb incident solar radiation. This can increase efficiency since the target fluid can absorb as much energy as it can directly without requiring heat exchange with another medium. However, the working fluid can be designed to absorb radiation at wavelengths at which the target fluid has poor absorption, hence capturing more of the incident energy in total.

The arrangement of layers depends on the different wavelength ranges in which each of the fluid absorbs radiation.

The target fluid and the working fluid are arranged such that incoming solar radiation passes through the target fluid prior to passing into the working fluid. In particular, the target fluid layer is positioned above the working fluid layer in the solar energy system such that incident radiation passes through the target fluid layer before reaching the working fluid layer. This maximises the opportunity for the incident radiation to be absorbed directed by the target fluid.

Optionally, the inter-fluidic dividing layer is transparent, alternatively the inter-fluidic dividing layer may be translucent, and in a further variation, the inter-fluidic dividing layer transmits light in a diffusive manner. Transparent dividing layers may allow a greater proportion of the light to enter the working fluid than non-transparent dividing layers. Diffusive or translucent dividing layers can help to spread incoming light rays, rather than focussing them on a small spot.

The inter-fluidic dividing layer may be transmissive to light in at least one of the infrared, visible, and ultraviolet parts of the spectrum. As the solar spectrum at the earth's surface is primarily composed of electromagnetic radiation in these regions of the spectrum, an inter-fluidic dividing layer that is transparent at these frequencies allows a large amount of the incident energy to pass from one fluid to the other, thereby improving the efficiency of the device. Moreover, the inter-fluidic dividing layer is preferably transmissive to light in both the infrared and visible parts of the electromagnetic spectrum. The working fluid is arranged to absorb light strongly in the visible spectrum, and re-radiate the absorbed energy in the infrared part of the spectrum to be absorbed by the target fluid. Therefore, it is necessary that the inter-fluidic dividing layer be transmissive to visible radiation, in order that a large proportion of the incoming energy is able to reach the working fluid. Further, the inter-fluidic dividing layer should also be transparent to infrared radiation, so that the re-emitted radiation can be transmitted with low losses to the target fluid.

Optionally, both the target fluid and the working fluid are liquid, although the skilled person will appreciate that the liquid working fluid carries solid particles suspended within it in preferred embodiments. This allows each fluid to circulate and therefore absorb energy more evenly than a solid would. Similarly, liquids are denser than gases, and therefore can store more thermal energy per unit volume than gases can. Using liquids as both working and target fluids therefore improves the overall efficiency of the device.

Optionally, the system further comprises means for circulating the target fluid through the target fluid layer of the system. In particular, the target fluid may be pumped or siphoned from an input connection or zone to an output connection or zone of the target fluid layer. As described in more detail below, target fluid can be passed through the target fluid layer and extracted from the output to be used directly for heating, washing, pasteurising, etc. It will be appreciated that the target fluid may be passed more than once through the solar energy system if the desired temperature has not been reached in a single cycle through the system. Cycling of the target fluid through the panel multiple times can be implemented either by circulating the fluid multiple times through the input connection or by creating a path through the panel that causes the target fluid to flow across the panel multiple times, for example by sectioning the solar panel layer containing the target fluid into multiple sections such that the target fluid flows across the panel multiple times between the input connection and the output connection. In one embodiment, a sensor and valve arrangement may be used to determine the temperature of the target fluid being emitted from the solar system and to redirect the fluid back to the input side for further heating.

In a preferred embodiment, the target fluid comprises water. This includes pure water, filtered and unfiltered water, distilled water and water as a solute, for example in saline or brine.

The working fluid may also be water-based, as described in more detail below. Alternatively, the working fluid comprises oil.

Preferably, the working fluid comprises a colloid comprising a dispersed phase of nanoparticles, preferably comprising carbon nanoparticles. That is, the nanoparticles are suspended within the working fluid. The dispersion medium may be water or oil based. Except for the thicker oils, the dispersion medium is preferably thickened with a high viscosity fluid or thickening medium, such as those described in more detail below, in particular a natural gum or rubber or a lecithin.

Preferably, the absorbance, or absorbency, of the incident radiation in the working fluid is greater than the absorbance of the incident radiation in the target fluid for at least a portion of the spectrum of the incident solar radiation. For example, if the target fluid comprises water, then it is likely to have low absorbance in the visible range of the electromagnetic spectrum. The working fluid can be designed to have high absorbance in the visible spectrum so that the working fluid can be used to absorb the energy that the target fluid cannot absorb and convert it to infrared radiation by radiating the energy as heat. The working fluid can therefore be designed to absorb in portions of the spectrum where the target fluid is less strongly absorbent. In one embodiment, the target fluid absorbs strongly in a narrow range of frequencies, but the working fluid is designed to provide absorption across a broad range of frequencies.

In a particular embodiment, the portion of the spectrum where the working fluid absorbs more strongly than the target fluid comprises visible wavelengths. Preferably, the working fluid emits absorbed radiation at infrared wavelengths. The target fluid can then absorb the emitted infrared radiation.

A preferred embodiment of the system further comprises an upper insulating layer. This is preferably transparent to at least visible and infrared wavelengths of the electromagnetic spectrum. However, the skilled person will appreciate that the layer does not need to be optically clear, but can diffuse the incident radiation providing that the energy is transmitted. The insulating layer may simply comprise an air gap between two layers of plastic or glass. However, preferably, the insulating layer comprises a static air layer. Such a layer may be implemented, for example by providing at least two layers of air separated by a film or membrane. The film helps to stratify the air within the insulating layer and reduces heat loss from the system by convection. An alternative approach to stagnating the air within the insulating layer is to provide a structure in some or all of the insulating gap that maintains the air in separate pockets, such as a honeycomb structure or structure of sealed air pockets, which may be manufactured from a plastics material.

Preferably, the lower retaining layer comprises a reflective layer for reflecting radiation back through the overlying layers. Hence any energy that has not been absorbed on a first pass through the layers of the solar energy system may be absorbed as it passes through the layers on the way out of the solar energy system.

In one embodiment, the transfer of energy between the working fluid and the target fluid predominantly comprises radiant transfer.

According to another aspect, there is provided a solar panel for heating a target fluid using incident solar radiation, the solar panel comprising:
three major edges arranged so that the solar panel can be inscribed in a triangle with each major edge of the panel lying along at least a portion of a side of the triangle;
   a cavity for retaining the target fluid; and
an inlet and an outlet for the target fluid, for exchanging the target fluid with adjacent solar panels.

By making solar panels in a shape which is based on the triangle, it is possible to tile large areas, since triangles tessellate. In this context, the three major edges of the panel are the three longest edges. For example, when the edges of the panel lie along the whole length of the sides of the triangle, the panel itself will also be triangular, and therefore have only three edges. In this case, these three edges correspond to the full lengths of the major edges. In other embodiments, the major edges of the panel lie along only a portion of the triangle. In this case, the major edges are joined together by minor edges, and the shape of the panel may be that of a truncated triangle with the corners removed, which can also be thought of as an irregular hexagon.

The solar panel may comprise the inlet and outlet being located adjacent to a corner of the triangle. While other shapes also tessellate (squares, rectangles, hexagons etc.), a further advantage of triangle-based shapes is that a large number of connections can be made between adjacent triangles when the inlet and outlet are located adjacent to the corner of the triangle. For example, comparing triangles to other shapes which tessellate, a hexagon can connect to at most 6 adjacent hexagons, squares or rectangles can connect to up to 8 adjacent squares or rectangles, but triangles are able to connect to up to 12 adjacent shapes. Therefore, when triangle-based shapes are used, the target fluid can flow out of one panel to a large number of neighbouring panels, thus providing a flexible network.

The solar panel may comprise three inlets and three outlets. Moreover, optionally one inlet and one outlet are located adjacent to each corner of the triangle. As explained above, locating inlets and outlets near the corners of the triangle, in particular locating them on the minor edges of the panel, if the panel has minor edges, provides a flexible network.

The solar panel may be shaped as a truncated triangle, having three major edges alternated with three minor edges, wherein the minor edges are shorter than the major edges. Truncating a triangular panel provides a space when the panels join together, in which the inlets and outlets of adjacent panels may be connected together.

The major edges of the solar panel may be at least 3 times as long as the minor edges, and optionally the triangle is equilateral.

In a feature that may be provided in conjunction with or independently of the triangular panel shape, the cavity of the solar panel for retaining the target fluid may comprise an internal structure shaped to increase the time spent in the panel by the target fluid by forcing the target fluid to follow a path between an inlet and an outlet which is longer than the straight line path. By forcing the target fluid to spend more time in the panel, the target fluid is able to reach a higher temperature. Optionally, the cavity is defined by a moulded plastic sheet, or a plurality of plastic sheets connected between the upper and lower surfaces of the cavity containing the target fluid. This allows the panel to be produced easily and cheaply.

Optionally, the internal structure of the panel causes the target fluid to circulate within the panel. For example, the fluid can take a spiralling path through the panel.

The solar panel may be provided in different sizes, for example a large panel may have major edges which are between 0.9m and 1m; the major edges of an intermediate panel may be between 0.5m and 0.7m; and the major edges of a small panel may be between 0.2m and 0.4m. In preferred embodiments, an array of 6 or so of the smaller panels is arranged to provide enough hot water for a single user in equatorial regions.

The solar panel further comprises the solar energy system described above.

According to a further aspect, there is provided a network of solar panels for heating a target fluid using incident solar radiation, the network comprising:
a first solar panel; and
a second solar panel; wherein
the first and second solar panels each include a cavity for retaining a target fluid, and the first and second solar panels are coupled together to allow the target fluid to flow between them; and
further comprising means for selectively enabling fluid flow into each panel.

When fluid flow is selectively enabled into the panels, the flow can be directed around the network. For example, the flow may be directed based on how hot each panel is. When a panel is cooler, for example because it is in the shade, target fluid is not sent to that panel, as it would not be able to contribute to the heating of the target fluid. The efficiency of the network is therefore improved by avoiding cooler panels.

Preferably, flow through an array of solar panels is controlled by restricting or enabling the inflow of fluid into a panel. However, the outflow of fluid from a panel is not restricted. The solar panels forming part of the network are preferably the solar panels described above.

Optionally, the solar panels in the network are arranged adjacent to one another, coupled along one of their major edges. As described above, connecting the solar panels together along their major edges means that the panels meet at their corners (or minor edges). This provides each panel with up to 12 adjacent panels to exchange target fluid with, and provides a flexible network.

The solar panels in the network may be joined together adjustably and/or flexibly so that the distance and/or angle between adjacent panels is variable. This allows the panels to be mounted on surfaces with complex underlying geometry, since the network can flex to fit the panels to the underlying surface.

Optionally, each panel has an inlet and an outlet coupled to an adjacent panel, and the flow of target fluid is controlled by selectively opening or closing inlets.

Optionally the target fluid can flow in either direction between adjacent panels.

The flow of target fluid around the network is controlled by valves configured to open above a first predetermined temperature, and close below a second predetermined temperature. A suitable switching temperature may be 60°C as this is a temperature high enough to kill most water-borne pathogens. Thus, allowing water to flow into panels which are at around 60°C, and preventing flow into those below this temperature can help to ensure that all water in the system is sanitised.

The valves in the network may comprise a physical valve, arranged to change shape and/or size in response to temperature. For example, the physical valve may be a diaphragm having a dome-shaped body, configured to invert itself in response to stresses generated by thermal expansion or contraction of the diaphragm. Arranging the valves to operate in this way means that there need not be complex control systems in place. Instead, bypassing of cooler panels is an inherent feature of the system.

Embodiments of the apparatus and methods described herein will now be described in more detail with reference to the drawings in which:
Fig. 1 is a schematic diagram of a solar thermal system according to one embodiment;
Fig. 2 is a schematic diagram of a solar thermal system according to a further embodiment;
Fig. 3 is a plan view of a solar panel according to an embodiment;
Figs. 4A and 4B are plan views of a network of solar panels according to an embodiment;
Figs. 5A and 5B are plan views of solar panels according to another embodiment;

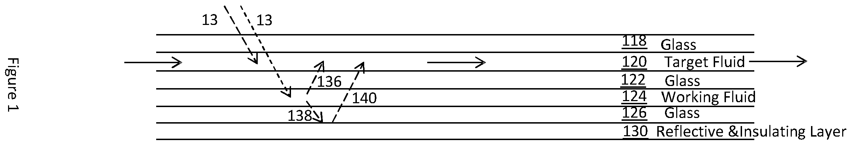

Fig. 1 illustrates schematically an embodiment of solar thermal system. The system comprises a number of layers stacked in a flat-panel arrangement. The first, or upper layer comprises a protective glass layer 118 which provides some structural stability and protection for the panel. Glass is rigid, scratch resistant, and is transparent to a broad spectrum of the incident electromagnetic radiation, so it is a suitable material to use for the upper layer of the solar thermal system. However, the skilled person will appreciate that other materials such as a transparent plastic may also be suitable. It will be appreciated that the upper layer need not be optically clear, but may diffuse the light.

Below the upper glass layer there is provided a layer of the target fluid 120. The target fluid is the fluid into which the solar thermal system is designed to transfer the solar energy. Typically, the target fluid comprises water. Water is transparent to some wavelengths of the incident solar radiation, in particular the radiation at visible wavelengths and higher. Therefore, a large proportion of the incident radiation will pass directly through the water 134. However, water is opaque to radiation at infrared wavelengths. Therefore, the incident radiation at infrared wavelengths and lower is absorbed 132 into the target fluid on entry into the system and hence can be used to heat the water directly. This minimises the number of layers that this useful part of the spectrum of the incident radiation must pass through before absorption by the target fluid.

A further advantage of enabling the incident radiation to pass first through the target fluid, at least in some embodiments, is that the incident ultraviolet radiation will have a pasteurising or anti-microbial effect on the target fluid. This may be helpful, for example, in a system designed to pasteurise water.

The target fluid is supported by a further glass layer 122, which also separates the target fluid 120 from the layer of working fluid 124. In fact, so long as light is transmitted through this further layer 122 (also called an inter-fluidic dividing layer), it is possible to use both the working fluid 124 and the target fluid 120 to extract energy from sunlight. Therefore, any material, such as light-transmissive plastics may be used for the inter-fluidic dividing layer 122.

Since a large proportion of the solar energy incident on the surface of the Earth is in the infrared, visible, and ultraviolet regions of the electromagnetic spectrum, it is preferable that the inter-fluidic dividing layer 122 is transmissive to light in any one of these regions. Preferably, the layer 122 is transmissive to light in the infrared and visible portions of the spectrum, as these two regions combined account for a majority of the sun's energy which reaches the earth's surface.

In this context, "transmissive" means that the light is not blocked by the layer. For example, the light may pass through almost entirely unaffected, if the layer is transparent. Alternatively, the layer may be diffusive or translucent, in which case, the incident light rays are substantially scattered in an incoherent manner, but nonetheless pass through the layer.

The working fluid is designed to have a high absorption of incident radiation at wavelengths at which the target fluid has a poor absorption. In particular, as described in more detail below, the working fluid is designed to absorb a high proportion of the radiation incident at wavelengths within the visible part of the spectrum. Absorption of the radiation causes the working fluid to heat up and to emit infrared radiation 136, 138. This infrared radiation is transmitted 136 or reflected 138 back to the target fluid 120 for absorption.

Below the working fluid there is provided a lower glass layer 126, which covers a reflective and insulating layer 130 shown in Fig 1 as a single layer, but which may be provided as two separate layers. In particular, the reflective layer may be provided by adding a reflective coating to the lower surface of the glass layer 126. The insulting layer can be formed of any suitable organic or inorganic material such as polystyrene, polyester or another plastics-based material or insulating felt or wool.

The target fluid from any of the systems described herein may be used directly for drinking, cooking, heating or washing, or may be used for sterilising, pasteurising other fluids or items. The heated fluid may also be used for space or water heating, drying, cleaning or solar-driven cooling. The systems described herein may also be used as part of a distillation process, for example for the desalination of salt water. While the target fluid is preferably used directly, it is possible to transfer the energy from the target fluid into another medium, such as another fluid, or into another form, such as electrical energy, outside the solar thermal system illustrated in Fig. 1.

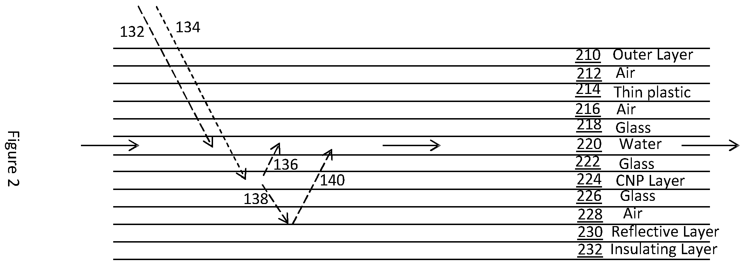

Fig. 2 is a schematic diagram of a solar thermal system according to a second embodiment. The system of Fig. 2 incorporates all of the elements of Fig. 1 described above, but includes a number of additional layers to improve the performance or robustness of the system.

In particular, the upper glass surface of the panel is covered with additional layers to decrease the heat loss from the panel and provide additional strength and resilience to the panel. The panel is covered with an outer glass or plastic-based layer 210, embodiments of which will be discussed in more detail below.

Below the outer layer 210 is an air gap comprising two sealed sections 212, 216 filled with air and separated by a thin plastic film 214 or membrane. The thin plastic layer stratifies the air within the air gap 212, 216, reducing movement of the air in this space and therefore reducing the movement of heat between the outer layer 210 and the glass surface 218. The plastic film can be manufactured from any suitable plastics material, for example polyethylene (HDPE or LDPE) or polyvinyl chloride.

This outer structure, including the outer layer and the stratified air gap, reduces loss of heat from the target material in the solar panel.

The outer structure is followed by the layers already described above in relation to Fig. 1; an upper glass layer 218, the target fluid in this case comprising water 220, a second glass layer 222, the working fluid in this case comprising a carbon nanofluid 224 and a third glass layer 226.

Advantageously, a further air gap 228 is arranged below the third glass layer 226 to provide insulation and reduce heat loss from the lower surface of the panel. The final layers comprise a reflective layer 230 and an insulating layer, as in the embodiment of Fig. 1, but these are provided as two separate layers in this embodiment.

It is desirable to make each layer in the panels described in Figs. 1 and 2 as thin and light as possible while still enabling it to maintain its functionality. Typically, each glass layer will be around 1mm thick and the layers of the target and working fluids will be 0.5mm-1mm in thickness. Other layers may be much thinner, however; in particular, it is not necessary to make the thin film layer thicker than around 0.01mm and the reflective layer may simply comprise a thin layer of foil that is also around 0.01mm in thickness, or simply a coating painted onto an adjacent glass or insulating layer. The total thickness of a panel such as that illustrated in Fig. 2 should be less than 20mm, preferably less than 15mm, preferably around 10mm in thickness.

Reducing the thickness of the panel reduces its cost since it reduces the amount of material required to manufacture the panel. It also results in a lighter-weight panel, making the panel easier and cheaper to transport, install and use.

It is further noted that none of the solid layers in the panels described above with reference to Figs. 1 and 2 need to be optically clear and, in fact, providing diffuse optical layers can reduce the loss of unabsorbed electromagnetic energy from the panel, since it is more difficult for the energy to reflect back out of the panel. In addition, there are many appropriate materials from which these layers could be made, for example light-transmissive plastics or glass. As has been emphasised above, transmission in the infrared, visible, and/or ultraviolet parts of the electromagnetic spectrum is preferable, as these regions collectively account for the vast majority of incident solar radiation at the earth's surface.

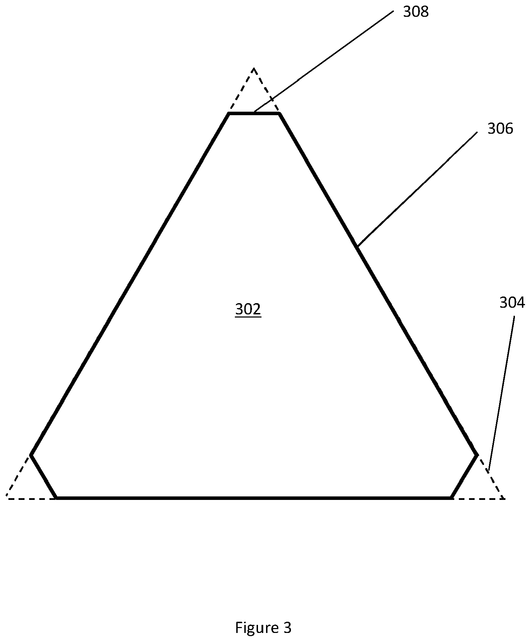

While the panels may be made in any shape, a particularly advantageous shape for the panels is based on triangular shapes. For example, Fig.3 shows a solar panel 302 having a substantially triangular shape. In fact, the shape is that of an irregular hexagon, or a truncated triangle, that is a triangle with the corners removed. The shape of the panel is such that it has three major edges 306, and three minor edges 308. The major edges 306 are arranged so that they lie along (that is, they are aligned with) the sides of a triangle 304, shown schematically by dashed lines in this figure. It is important to note that the triangle 304 is not part of the solar panel, but is shown solely for illustrative purposes, to highlight the triangular basis for the shape of the solar panel. Of course, it is possible that the major edges 306 of the solar panel extend all the way to the corners of the triangle 304, so that the panel 302 is itself triangular.

The panel shown in Fig.3 is based on an equilateral triangle, but may be based instead on other triangles, depending on the desired application.

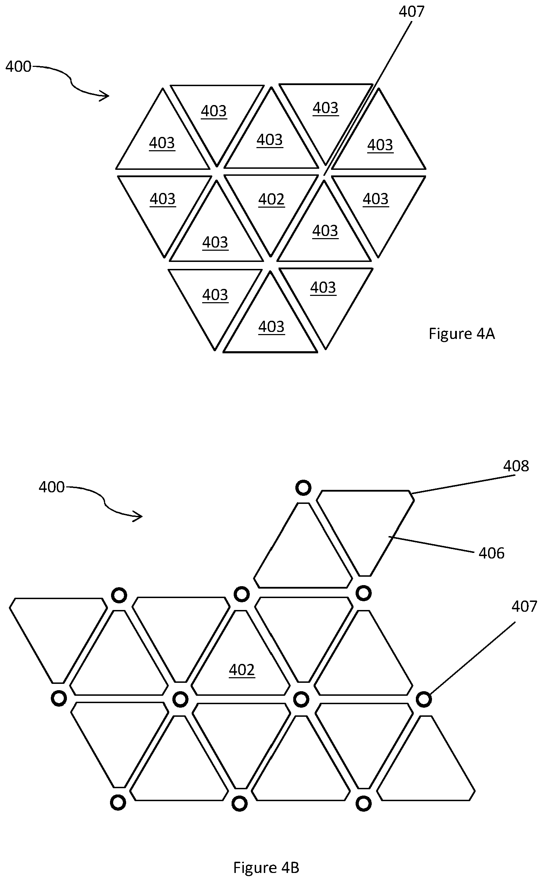

Turning now to Figs. 4A and 4B, a plurality of solar panels 402, 403 are shown in a network 400. In fig. 4A, a central panel 402 is surrounded by adjacent panels. Here, the panels are triangular in shape. In this figure, the panels 402, 403 can have inlets and outlets for exchanging target fluid with adjacent panels which are situated in the corners of the triangles. This means that there are regions 407, where many of the panels may couple to one another to exchange fluid. In this example, each region 407 has 6 panels linking to it. This means that the central panel 402 is able to link to 12 neighbours in total to exchange target fluid. This high degree of connectivity means that the resulting network is very flexible and can conform to convex, concave or circular shapes.

In Fig. 4B, the panels 402 each have the truncated triangle (or irregular hexagonal) shape. In addition, the network 400 is an irregular shape. It will be apparent that the overall shape of the network can be adapted to fit a wide range of shapes and sizes, by simply adding more panels where needed. In addition, the panels can be connected to one another so that the distance and/or angle between the panels can be adjusted. This allows the network to conform to the underlying geometry, even when it is not flat. It will further be appreciated that not all of the panels may be interconnected along their edges so that a larger gap can be left between some adjacent panels if this is necessary to conform to the underlying geometry.

At the locations where 6 panels 402 meet, there is a gap, due to the truncation of the triangular shape. This allows more space for a fluid interchange hub 407 that was possible using regular triangular shaped panels. In this example, the minor edges 408 include inlets and outlets for the panels, so that the panels can each exchange target fluid with adjacent panels, in any flow direction.

The flow of the target fluid around the network 400 can be controlled for a variety of reasons. Most importantly, there may be situations when a particular panel is significantly cooler than the others, perhaps because the sun has moved in the sky and that panel is now in shade. If the target fluid flows to that panel, then the overall heating power of the network will be reduced, and the fluid output at the end will be at a lower temperature. Therefore, it can be advantageous to divert the flow of the target fluid around the network by selectively closing inlet valves to particular panels so that cooler panels are bypassed.

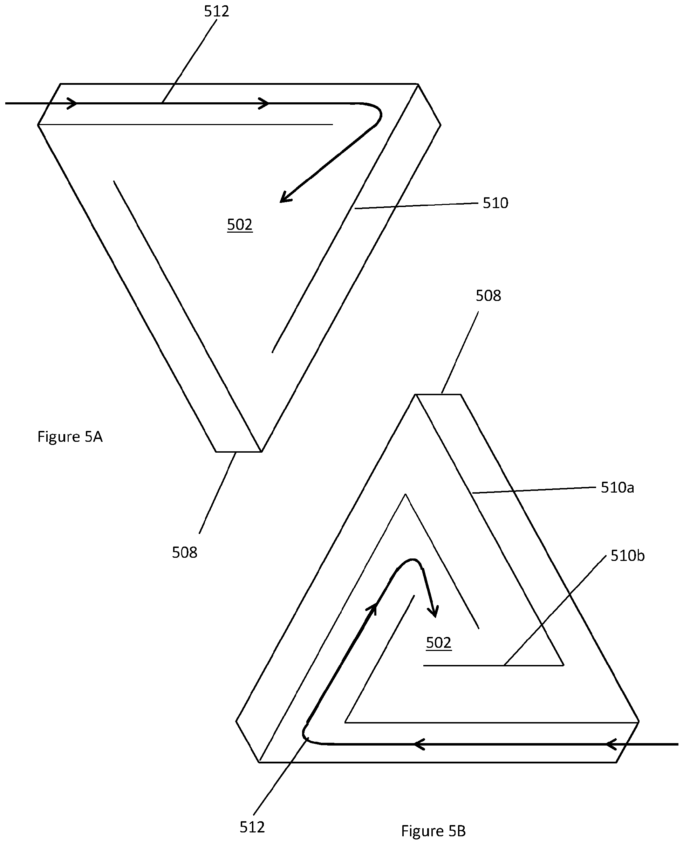

Turning now to Figs. 5A and 5B, some internal structure of the solar panels 502 is shown. In particular, Fig 5A shows solar panel 502 with three internal walls 510, shaped to direct the flow of target fluid towards the centre of the panel 502. Once again, the inlets and outlets for this panel 502 are located in the minor edges 508 of the panel. A flow path 512 shows how fluid entering at the top left corner progresses through the panel. Instead of being able to travel along one major edge of the panel, and exit as soon as it reaches another minor edge, the fluid must flow almost the entire length of a major edge before making it to the centre of the panel. In order to exit the panel, the fluid must travel almost two further major edge's distance.

Considering now Fig. 5B, in which a similar internal structure is shown. However, in this case, there are six internal walls, 510a and 510b. In effect, this is the same design as that shown in Fig. 5A, but with a smaller version of the same design nested within the original one. It is clear that the path length 512 for the fluid to arrive at the centre of the panel in this figure is even longer than the one in Fig. 5A. Once at the centre, the fluid must traverse the same lengthy path in reverse, in order to exit the panel. It will be apparent to the skilled person that this process of nesting similar, but smaller versions of the internal structure of Fig. 5A can be repeated as often as desired, for example, forming a spiral structure.

It will be apparent to the skilled person that there are many different designs which could be used to increase the path length of the fluid as it travels through a panel. For example, while the examples in Figs. 5A and 5B each use straight walls, curved walls could be used as well or instead.

As the incident solar radiation transitions from air into each of the layers of the solar panel system described herein, around 20% of the energy is lost through reflection. In order to reduce the loss of energy at each air/solid interface, a matching layer can be provided. The matching layer has a profile such that the impedance of the matching layer to electromagnetic radiation varies through the layer from a value close to the impedance of air to close to the impedance of the solid into which the radiation is passing. The matching layer can be attached to or formed on the surface of each solid layer, where the solid layer interfaces with air such that the matching layer enables the electromagnetic radiation to transition into and out of each layer while minimizing the loss of energy due to reflection and sudden changes in refractive index.

## Claims

1. A solar energy system for heating a target fluid using incident solar radiation (13), the system comprising:
a protective upper layer (118);
a target fluid layer comprising the target fluid (120);
a light transmissive inter-fluidic dividing layer (122);
a working fluid layer comprising a working fluid (124); and
a lower retaining layer (126),
wherein the light-transmissive inter-fluidic dividing layer (122) enables each of the fluids (120, 124) to absorb incident solar radiation (13); and
wherein both the target fluid (120) and the working fluid (124) are liquids;
wherein the working fluid (124) is arranged to absorb light strongly in the visible spectrum, and re-radiate the absorbed energy in the infrared part of the spectrum to be absorbed by the target fluid (120),
wherein the target fluid (120) has a lower absorbency than the working fluid (124) in the visible part of the spectrum; and
wherein incoming solar radiation (13) passes through the target fluid (120) prior to passing into the working fluid (124).

2. The system according to claim 1, wherein the inter-fluidic dividing layer (122) is transparent, translucent or transmits light in a diffusive manner.

3. The system according to claim 1 or 2, wherein the inter-fluidic dividing layer (122) is transmissive to light in both the infrared and visible parts of the electromagnetic spectrum.

4. The system according to any of claims 1 to 3, further comprising means for circulating the target fluid through the target fluid (120) layer of the system.

5. The system according to any of claims 1 to 4, wherein the working fluid (124) comprises a colloid comprising a dispersed phase of nanoparticles, optionally wherein the nanoparticles comprise carbon nanoparticles.

6. The system according to claim 5 wherein the colloid comprises a dispersion medium comprising oil or water.

7. The system according to claim 6 wherein the dispersion medium further comprises a high viscosity fluid for thickening the dispersion medium.

8. The system according to any of claims 1 to 7, wherein the working fluid (124) emits (136) absorbed radiation at infrared wavelengths.

9. The system according to any of claims 1 to 8, further comprising an upper insulating layer (212, 214, 216).

10. The system according to any of claims 1 to 9, wherein the lower retaining layer (126) comprises a reflective layer (130) for reflecting (140) radiation back through the overlying layers.

11. The system according to any of claims 1 to 10, wherein the transfer of energy between the working fluid (124) and the target fluid (120) predominantly comprises radiant transfer.

12. A solar panel comprising a solar energy system according to any one of claims 1 to 11, the solar panel (302) comprising:
three major edges (306) arranged so that the solar panel (302) can be inscribed in a triangle (304) with each major edge (306) of the panel (302) lying along at least a portion of a side of the triangle (304);
an inlet and an outlet for the target fluid, for exchanging the target fluid with adjacent solar panels (302).

13. A network (400) of solar panels (402) for heating a target fluid (120) using incident solar radiation (13), the network comprising:
a first solar energy system according to any of claims 1 to 11; and
a second solar energy system according to any of claims 1 to 11; wherein
the first and second solar energy systems are coupled together to allow the target fluid (120) to flow between them; and
further comprising means (1100) for selectively enabling fluid flow into each panel.

## Patentansprüche

1. Solarenergiesystem zum Erhitzen eines Zielfluids unter Verwendung von Solareinstrahlung (13), wobei das System umfasst:
eine obere Schutzschicht (118);
eine Zielfluidschicht, die das Zielfluid (120) umfasst;
eine lichtdurchlässige Zwischenfluid-Trennungsschicht (122) ;
eine Arbeitsfluidschicht, die ein Arbeitsfluid (124) umfasst; und
eine untere Zurückhalteschicht (126),
wobei die lichtdurchlässige Zwischenfluid-Trennungsschicht (122) jedem der Fluide (120, 124) ermöglicht, Solareinstrahlung (13) zu absorbieren; und
wobei sowohl das Zielfluid (120) als auch das Arbeitsfluid (124) Flüssigkeiten sind;
wobei das Arbeitsfluid (124) dazu eingerichtet ist, Licht stark im sichtbaren Spektrum zu absorbieren und die absorbierte Energie im Infrarotteil des Spektrums erneut abzustrahlen, um von dem Zielfluid (120) absorbiert zu werden,
wobei das Zielfluid (120) ein geringeres Absorptionsvermögen im sichtbaren Teil des Spektrums als das Arbeitsfluid (124) aufweist und
wobei einfallende Solarstrahlung (13) vor dem Leiten in das Arbeitsfluid (124) durch das Zielfluid (120) geleitet wird.

2. System nach Anspruch 1, wobei die Zwischenfluid-Trennungsschicht (122) transparent oder transluzent ist oder Licht auf streuende Weise überträgt.

3. System nach Anspruch 1 oder 2, wobei die Zwischenfluid-Trennungsschicht (122) für Licht in sowohl dem Infrarot- als auch dem sichtbaren Teil des elektromagnetischen Spektrums durchlässig ist.

4. System nach einem der Ansprüche 1 bis 3, weiterhin umfassend Mittel zum Zirkulieren des Zielfluids durch die Schicht des Zielfluids (120) des Systems.

5. System nach einem der Ansprüche 1 bis 4, wobei das Arbeitsfluid (124) ein Kolloid umfasst, das eine dispergierte Phase von Nanoteilchen umfasst, optional wobei die Nanoteilchen Kohlenstoffnanoteilchen umfassen.

6. System nach Anspruch 5, wobei das Kolloid ein Dispersionsmedium umfasst, das Öl oder Wasser umfasst.

7. System nach Anspruch 6, wobei das Dispersionsmedium weiterhin ein hochviskoses Fluid zum Verdicken des Dispersionsmediums umfasst.

8. System nach einem der Ansprüche 1 bis 7, wobei das Arbeitsfluid (124) absorbierte Strahlung mit Infrarotwellenlängen emittiert (136).

9. System nach einem der Ansprüche 1 bis 8, weiterhin umfassend eine obere Isolierschicht (212, 214, 216).

10. System nach einem der Ansprüche 1 bis 9, wobei die untere Zurückhalteschicht (126) eine reflektierende Schicht (130) zum Reflektieren (140) von Strahlung zurück durch die darüber liegenden Schichten umfasst.

11. System nach einem der Ansprüche 1 bis 10, wobei der Energietransfer zwischen dem Arbeitsfluid (124) und dem Zielfluid (120) vorwiegend Strahlungstransfer umfasst.

12. Solarkollektor, umfassend ein Solarenergiesystem nach einem der Ansprüche 1 bis 11, wobei der Solarkollektor (302) umfasst:
drei Hauptkanten (306), die so eingerichtet sind, dass der Solarkollektor (302) in ein Dreieck (304) eingesetzt werden kann, wobei jede Hauptkante (306) des Kollektors (302) entlang mindestens einem Abschnitt einer Seite des Dreiecks (304) liegt;
einen Einlass und einen Auslass für das Zielfluid zum Austauschen des Zielfluids mit benachbarten Solarkollektoren (302).

13. Netzwerk (400) von Solarkollektoren (402) zum Erhitzen eines Zielfluids (120) unter Verwendung von Solareinstrahlung (13), wobei das Netzwerk umfasst:
ein erstes Solarenergiesystem nach einem der Ansprüche 1 bis 11 und
ein zweites Solarenergiesystem nach einem der Ansprüche 1 bis 11; wobei
das erste und das zweite Solarenergiesystem aneinander gekoppelt sind, um dem Zielfluid (120) zu ermöglichen, zwischen ihnen zu strömen; und
weiterhin umfassend Mittel (1100) zum selektiven Ermöglichen von Fluidströmung in jeden Kollektor.

## Revendications

1. Système d'énergie solaire servant à chauffer un fluide cible en utilisant un rayonnement solaire incident (13), le système comportant :
une couche supérieure protectrice (118) ;
une couche de fluide cible comportant le fluide cible (120) ;
une couche de séparation inter-fluidique transmettant la lumière (122) ;
une couche de fluide de travail comportant un fluide de travail (124) ; et
une couche de retenue inférieure (126),
dans lequel la couche de séparation inter-fluidique transmettant la lumière (122) permet à chacun des fluides (120, 124) d'absorber un rayonnement solaire incident (13) ; et
dans lequel à la fois le fluide cible (120) et le fluide de travail (124) sont des liquides ;
dans lequel le fluide de travail (124) est agencé pour absorber de la lumière fortement dans le spectre visible, et pour effectuer un rerayonnement de l'énergie absorbée dans la partie infrarouge du spectre à des fins d'absorption par le fluide cible (120),
dans lequel le fluide cible (120) a une absorptivité inférieure par rapport au fluide de travail (124) dans la partie visible du spectre ; et
dans lequel le rayonnement solaire entrant (13) passe au travers du fluide cible (120) avant de passer dans le fluide de travail (124).

2. Système selon la revendication 1, dans lequel la couche de séparation inter-fluidique (122) est transparente, translucide ou transmet la lumière d'une manière diffusive.

3. Système selon la revendication 1 ou la revendication 2, dans lequel la couche de séparation inter-fluidique (122) est transmissive à la lumière dans à la fois les parties infrarouge et visible du spectre électromagnétique.

4. Système selon l'une quelconque des revendications 1 à 3, comportant par ailleurs un moyen servant à faire circuler le fluide cible au travers de la couche de fluide cible (120) du système.

5. Système selon l'une quelconque des revendications 1 à 4, dans lequel le fluide de travail (124) comporte un colloïde comportant une phase dispersée de nanoparticules, éventuellement dans lequel les nanoparticules comportent des nanoparticules de carbone.

6. Système selon la revendication 5, dans lequel le colloïde comporte un milieu de dispersion comportant de l'huile ou de l'eau.

7. Système selon la revendication 6, dans lequel le milieu de dispersion comporte par ailleurs un fluide à haute viscosité à des fins d'épaississement du milieu de dispersion.

8. Système selon l'une quelconque des revendications 1 à 7, dans lequel le fluide de travail (124) émet (136) un rayonnement absorbé à des longueurs d'ondes infrarouges.

9. Système selon l'une quelconque des revendications 1 à 8, comportant par ailleurs une couche isolante supérieure (212, 214, 216).

10. Système selon l'une quelconque des revendications 1 à 9, dans lequel la couche de retenue inférieure (126) comporte une couche réfléchissante (130) servant à faire réfléchir (140) le rayonnement de retour au travers des couches sus-jacentes.

11. Système selon l'une quelconque des revendications 1 à 10, dans lequel le transfert d'énergie entre le fluide de travail (124) et le fluide cible (120) comporte essentiellement un transfert par rayonnement.

12. Panneau solaire comportant un système d'énergie solaire selon l'une quelconque des revendications 1 à 11, le panneau solaire (302) comportant :
trois bords principaux (306) agencés de telle sorte que le panneau solaire (302) peut s'inscrire dans un triangle (304), chaque bord principal (306) du panneau (302) reposant le long d'au moins une partie d'un côté du triangle (304) ;
un orifice d'entrée et un orifice de sortie pour le fluide cible, servant à échanger le fluide cible avec des panneaux solaires adjacents (302).

13. Réseau (400) de panneaux solaires (402) servant à chauffer un fluide cible (120) en utilisant un rayonnement solaire incident (13), le réseau comportant :
un premier système d'énergie solaire selon l'une quelconque des revendications 1 à 11 ; et
un deuxième système d'énergie solaire selon l'une quelconque des revendications 1 à 11 ; dans lequel
les premier et deuxième systèmes d'énergie solaire sont accouplés ensemble pour permettre au fluide cible (120) de s'écouler entre eux ; et
comportant par ailleurs un moyen (1100) permettant de manière sélective au fluide de s'écouler dans chaque panneau.
